# FASCICULE DE BREVET EUROPEEN

(11) **EP 0 667 508 B1**
(45) Date de publication et mention de la délivrance du brevet: **17.06.1998**
(21) Numéro de dépôt: 95400228.3
(22) Date de dépôt: 03.02.1995
(51) Int. Cl.: G01B 15/02, G12B 17/00, G01N 23/16

(54) **Dispositif pour la mesure du profil d'épaisseur d'un produit métallique sous forme de bande ou de plaque en défilement**
Vorrichtung zur Messung des Dickeprofils eines vorbeilaufenden bandförmigen oder flachen Metallproduktes
Device to measure the thickness profile of a metallic product such as a running band or slab

(30) Priorité: 11.02.1994 FR 9401725
(43) Date de publication de la demande: 16.08.1995
(73) Titulaire: SOLLAC S.A., 92800 Puteaux (FR)
(72) Inventeur: Campas, Jean-Jacques, F-57530 Colligny (FR); Terreaux, Stéphane, F-57159 Marange-Silvange (FR); Vanhée, Patrick, F-54150 Briey (FR)
(74) Mandataire: Ventavoli, Roger

(56) Documents cités:
- DE-A- 2 634 183
- DE-C- 914 069
- GB-A- 2 097 915
- PATENT ABSTRACTS OF JAPAN vol. 6, no. 129 (P-128) (1007) 15 Juillet 1982 & JP-A-57 053 607

## Description

L'invention concerne le domaine de la mesure de l'épaisseur de produits métallurgiques, notamment sidérurgiques. Plus précisément, elle concerne la mesure de l'épaisseur de produits plats (tôles, bandes, plaques) en défilement lors de leur laminage grâce à la mesure de l'absorption par lesdits produits de rayons X ou de tout autre rayonnement électromagnétique pénétrant.

La maîtrise du profil transversal d'épaisseur des produits sidérurgiques plats lors de leur laminage à chaud ou à froid est un enjeu majeur pour la qualité des produits offerts à la clientèle. Cette maîtrise nécessite un pilotage performant des opérations de laminage. A ce sujet, le laminage à froid est une étape importante en ce que des amincissements notables des rives du produit surviennent inévitablement si aucune contre-mesure n'est prise pour les éviter. Parmi les contre-mesures possibles figure l'utilisation de cylindres chanfreinés translatables pour suivre la rive de la bande. Mais ces contre-mesures ne peuvent être réellement efficaces que si, parallèlement, une installation fiable fournit une indication précise du profil de l'épaisseur du produit au niveau de ses rives en sortie du laminoir à froid. Bien entendu l'épaisseur du produit dans sa zone centrale doit, elle aussi, être soigneusement contrôlée. Sa régularité se joue essentiellement lors du laminage à chaud, mais pour les produits les plus exigeants (par exemple les aciers pour emballages et les aciers au silicium), l'influence du laminage à froid sur la régularité de leur épaisseur doit pouvoir être aussi mesurée.

Ces dernières années ont vu le développement de jauges d'épaisseur de produits métallurgiques mettant en oeuvre des unités de détections sensibles aux rayons X, telles que des barrettes de photodiodes. Les dispositifs de mesure incluant de telles jauges comportent souvent un bâti en forme de cé entourant le produit en défilement et disposé transversalement à lui. Dans les branches supérieure et inférieure du cé sont inclus, disposés en regard les uns des autres de chaque côté du produit en défilement, d'une part une ou des sources à rayons X collimatées en faisceaux plats, et d'autre part une ou des jauges comportant chacune un ensemble de barrettes de photodiodes destiné à détecter les rayons X émis par l'une des sources précédentes. Ces jauges sont disposées de manière à placer leurs barrettes transversalement au produit, par exemple, s'il y en a trois, l'une dans sa région centrale et les deux autres au voisinage de ses rives. Chaque photodiode reçoit un rayonnement d'autant plus intense que l'épaisseur du produit est plus faible face à elle. Elles émettent des signaux électriques qui, après un traitement approprié comportant une étape de numérisation, sont transmis à l'opérateur. Celui-ci peut ainsi, en considérant les résultats des mesures effectuées au même instant par toutes les photodiodes d'une même barrette, obtenir une image du profil d'épaisseur du produit dans les zones qui l'intéressent. Une telle jauge est décrite dans GB-A-2097915.

Jusqu'à présent, les barrettes et les composants électroniques qui les accompagnent étaient simplement installés dans une boîte parallélépipédique coiffée d'un capot en plomb. Ce capot était muni d'une fenêtre en un matériau perméable aux rayons X à l'aplomb des photodiodes. La boîte comportait également un dispositif de refroidissement devant évacuer la chaleur dissipée par les composants électroniques. L'ensemble de la boîte était installé dans le cé sans précautions particulières. Or l'expérience montre que l'environnement sévère constitué par le laminoir impose des conditions draconiennes quant à l'étanchéité de l'installation de détection. Cet environnement est, en effet, très humide, et si cette humidité pénètre dans la boîte, elle provoque une détérioration rapide par corrosion des éléments mécaniques de la jauge. De plus, les gradients de température à l'intérieur de la boîte (les photodiodes elles-mêmes ne dissipent quasiment pas de chaleur, contrairement aux composants électroniques) y provoquent localement de fortes condensations d'eau. Il s'avère donc indispensable d'isoler avec la plus grande fiabilité possible les organes de la jauge de leur environnement. D'un autre côté, il ne faut pas que cette obligation puisse gêner les possibilités d'intervention sur les éléments composant la jauge pour leur remplacement ou leur adaptation rapide à de nouvelles conditions expérimentales. Ces éléments doivent donc rester accessibles rapidement et aisément. Et il faut qu'après de telles interventions, les conditions d'étanchéité puissent être restituées à l'identique.

Le but de l'invention est de proposer une configuration de la jauge et de son environnement qui permettent de garantir une parfaite isolation de ses organes par rapport à l'environnement humide du laminoir, une grande facilité d'accès à ces mêmes organes, et un refroidissement efficace des composants électroniques de la jauge.

A cet effet, l'invention a pour objet un dispositif pour la mesure du profil d'épaisseur d'un produit métallique sous forme d'une bande ou d'une plaque en défilement, du type comportant une source de rayons X émettant en direction du produit, une unité de détection desdits rayons X située de l'autre côté dudit produit par rapport à ladite source, des moyens de traitement des signaux émis par l'unité de détection permettant de mesurer le profil d'épaisseur du produit, des moyens de restitution de cette mesure à l'opérateur et des moyens de refroidissement de l'unité de détection et des moyens de traitement de ses signaux, caractérisé en ce que l'unité de détection et les moyens de traitement de ses signaux sont disposés sur une plaque support munie à l'une de ses extrémités d'une plaque de fermeture comportant des connexions électriques et en fluides nécessaires au fonctionnement de l'unité de détection et des moyens de traitement de ses signaux, en ce que la plaque support est insérée de manière amovible dans un boîtier, dont l'une des faces latérales présente un évidement permettant l'insertion de ladite plaque support, des moyens pour la fixation de ladite plaque de fermeture et des moyens pour étanchéifier la liaison entre la face latérale et la plaque de fermeture, la face du boîtier située en regard du produit présentant, face à l'unité de détection, une fenêtre en un matériau perméable aux rayons X, un écran protecteur étant prévu pour absorber les rayons X susceptibles de parvenir sur les moyens de traitement des signaux de l'unité de détection, et en ce que le boîtier est installé dans un bâti qui le maintient à proximité dudit produit.

Comme on l'aura compris, l'invention consiste à réaliser le dispositif de mesure en deux parties indépendantes. La première partie est un boîtier parallélépipédique ouvert sur l'une des ses faces et destiné à être installé, éventuellement à demeure, dans un bâti pour être maintenu au voisinage du produit dont l'épaisseur est à mesurer. La deuxième partie est une plaque support destinée à être insérée dans le boîtier et sur laquelle sont fixés les organes fonctionnels de la jauge. A l'une des extrémités de cette plaque support est fixée une plaque de fermeture qui, lorsque la plaque support est insérée dans le boîtier, vient s'appliquer contre celui-ci de manière à en obturer la face ouverte. Des moyens sont prévus pour solidariser de manière étanche et démontable la plaque de fermeture et le boîtier. La plaque de fermeture porte sur sa face externe tous les moyens de connexion nécessaires au fonctionnement de la jauge alimentation en électricité et en fluide de refroidissement, restitution des données.

L'invention sera mieux comprise à la lecture de la Description qui suit, donnée en référence aux figures annexées suivantes :
- les figures 1a et 1b qui représentent le boîtier, vu respectivement en perspective et en coupe transversale selon la direction Ib ;
- la figure 2 qui représente la plaque support, les organes fonctionnels de la jauge et la plaque de fermeture ;
- la figure 3 qui représente schématiquement l'ensemble d'une installation de mesure de l'épaisseur d'une bande métallique en défilement, dans laquelle sont intégrées des jauges selon l'invention.

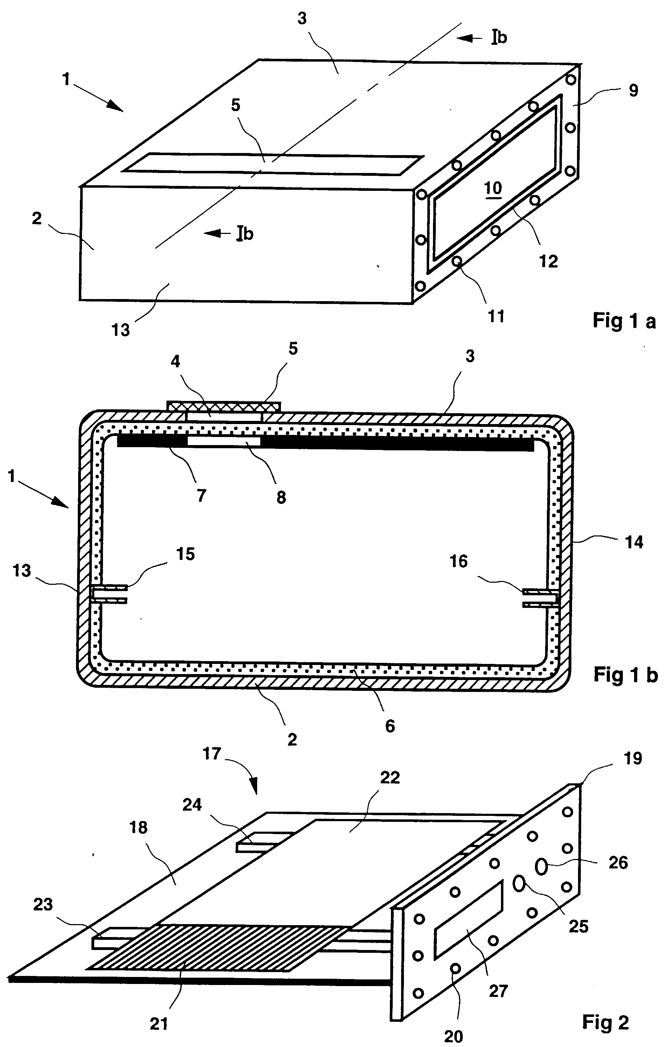

Tel que représenté sur les figures 1a et 1b, le boîtier se présente sous la forme d'une parallélépipède rectangle. Il est composé d'une enveloppe extérieure 2 en un matériau tel que l'acier ou le laiton, assurant à l'ensemble une bonne rigidité, donc une protection mécanique satisfaisante. Le rôle de cette enveloppe 2 est aussi d'assurer à la jauge une protection électromagnétique contre le milieu extérieur, afin que des champs électromagnétiques parasites éventuels ne puissent perturber le fonctionnement des organes de détection et de mesure. Sur sa face 3 destinée à être placée en regard de la source de rayons X, l'enveloppe 2 comporte un évidement 4 qui la traverse complètement et est coiffé par une plaque 5 en un matériau présentant une bonne perméabilité aux rayons X, tel que le titane. C'est en dessous de cet évidement 4 que seront placés les éléments sensibles aux rayons X, et l'emplacement et les dimensions de l'évidement 4 doivent être étudiés en conséquence. L'étanchéité de la jonction entre l'enveloppe 2 et la plaque 5 perméable aux rayons X doit être particulièrement soignée. Intérieurement, l'enveloppe 2 est revêtue sur toutes ses faces d'une couche 6 d'un matériau isolant (mousse réfractaire par exemple) assurant la protection thermique de la jauge. Sur sa portion revêtant la face 3 de l'enveloppe 2, la couche isolante 6 est doublée par un écran protecteur constitué par une plaque 7 en un matériau s'opposant au passage des rayons X, tel que le plomb. Cette plaque 7 présente elle-même un évidement 8 prolongeant l'évidement 4 de l'enveloppe 2, de manière à laisser parvenir les rayons X émis par la source et traversant le produit jusqu'aux éléments sensibles aux rayons X, et seulement jusqu'à eux. Les autres organes de la jauge restent ainsi à l'abri du rayonnement. En variante, la plaque 7 peut être intercalée entre l'enveloppe 2 et la couche isolante 6.

L'une des faces latérales 9 du boîtier 1, celle par laquelle devra être inséré le support des éléments actifs de la jauge dont il sera question plus loin, est munie à cet effet d'un large évidement 10. La périphérie de la face 9, autour de l'évidement 10, comporte une pluralité de trous taraudés 11 destinés à accueillir des vis de fixation, et une rainure dans laquelle est emprisonné un joint torique 12. Enfin, les faces latérales 13, 14 de l'enveloppe extérieure 2 qui sont perpendiculaires à la face latérale 9 évidée portent, sur au moins une partie de leur longueur et sur leur côté tourné vers l'intérieur du boîtier 1, des glissières 15, 16 parallèles et se faisant face. Leur fonction sera explicitée plus loin. Les différentes faces du boîtier 1 peuvent être assemblées par tout moyen assurant une bonne étanchéité et une bonne rigidité de leurs jonctions, par exemple par soudage, sachant que les éléments de ce boîtier 1 n'auront en principe pas besoin d'être désolidarisés ultérieurement.

Sur la figure 2, on a représenté la deuxième partie 17 du dispositif qui, telle un tiroir, est destinée à être insérée dans le boîtier 1. Cette deuxième partie 17 comporte une plaque support 18 dont la longueur et la largeur sont égales ou de peu inférieures aux dimensions internes du boîtier 1. A l'une des extrémités de la plaque support 18 est fixée perpendiculairement à elle une plaque de fermeture 19. Lorsque la plaque support 18 est insérée dans le boîtier, elle est introduite dans les glissières 15, 16 qui servent donc à ajuster la position de la plaque support 18 (et des organes qu'elle porte) à l'intérieur du boîtier 1. Lors de cette insertion, la plaque de fermeture 19 vient s'appliquer contre la face latérale évidée 9 du boîtier 1. Comme elle est munie sur son pourtour de perforations 20 correspondant aux trous taraudés 11 de la face évidée 9, la plaque de fermeture 19 peut être solidarisée du boîtier 1 par vissage, et l'étanchéité de leur contact est assurée par le joint torique 12. Les éléments actifs de la jauge sont portés par la plaque support 18. Ils consistent, tout d'abord, en une unité de détection 21, qui consiste par exemple en une barrette de photodiodes sensibles aux rayons X, d'une longueur égale à celle de la partie du produit sur laquelle on désire mesurer son épaisseur, par exemple 300 à 800 mm environ pour une jauge destinée à être installée au voisinage des rives d'une bande d'acier laminée à froid. L'unité de détection 21, lorsque la plaque support 18 est en place, est située à l'aplomb de la fenêtre 5 perméable aux rayons X. Les autres éléments actifs de la jauge sont constitués par les composants électroniques qui traitent les signaux fournis par l'unité de détection 21, de manière à les transformer en des indications représentatives, pour l'opérateur, de l'épaisseur du produit et de ses variations dans la zone examinée. Ces composants sont connus en eux-mêmes et, pour cette raison, ne seront pas décrits en détail et représentés. Ils sont disposés sur un circuit imprimé 22 solidaire de l'unité de détection 21. Ils comportent entre autres un convertisseur analogique-numérique, un calculateur de traitement et un régulateur de tension. Avantageusement, l'unité de détection 21 et le circuit imprimé 22 ne sont pas fixés directement sur la plaque support 18, mais sur deux barres 23, 24, elles-mêmes fixées à la plaque support 18. Ces barres 23, 24 comportent chacune un circuit de refroidissement par circulation interne d'un fluide, tel que de l'eau. Ces circuits de refroidissement peuvent être indépendants ou reliés l'un à l'autre. Par leur intermédiaire, il est ainsi possible de refroidir les éléments actifs de la jauge et de maintenir une température constante et peu élevée à l'intérieur du boîtier 1 lorsque la jauge est en fonctionnement. Ceci est essentiel pour la fiabilité des résultats de mesure obtenus. C'est surtout les composants électroniques qu'il convient de refroidir, car ils sont à la source de la plus grande partie de la chaleur dissipée dans le boîtier 1. On pourrait donc éventuellement se contenter d'utiliser une seule barre refroidissante disposée à leur niveau. La face avant de la plaque de fermeture 19 porte en outre des connexions 25, 26 pour l'arrivée et l'évacuation du fluide refroidissant, qui sont, sur sa face arrière, reliées aux barres refroidissantes 23, 24. Elle porte enfin une prise 27 grâce à laquelle on assure d'une part l'alimentation électrique des éléments actifs de la jauge et, d'autre part, la collecte à l'extérieur de la jauge des informations fournies par ces mêmes éléments. Si, pour parfaire encore l'isolation du boîtier 1, on désire insuffler un gaz neutre en son intérieur, cela peut également être fait par une ouverture (non représentée) ménagée dans la plaque de fermeture 19 et reliée à une source de gaz.

En variante, on peut également fixer la plaque 7 arrêtant les rayons X non pas dans le boîtier 1, mais solidairement à la plaque support 18, de manière à lui faire surplomber les éléments actifs de la jauge. Cette plaque 7 doit alors être amovible, de manière à laisser un libre accès à ces éléments actifs pour leur réglage ou leur changement.

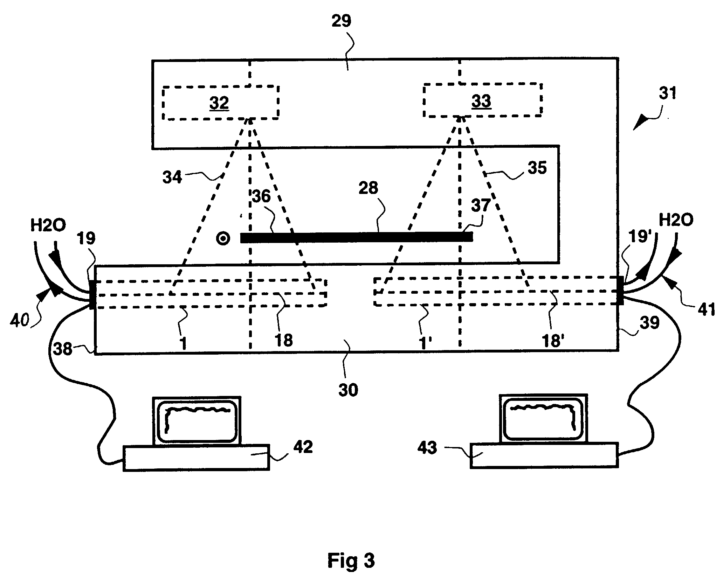

La figure 3 montre, à titre d'exemple, comment on peut implanter des dispositifs selon l'invention sur une installation de laminage de produits métallurgiques. Après sa sortie de la cage de laminage, la bande 28 en défilement dans un plan perpendiculaire au plan de figure passe entre les deux branches horizontales supérieure 29 et inférieure 30 d'un bâti 31 en forme de cé. Dans la branche supérieure 29 sont intégrées deux sources de rayons X 32, 33 envoyant leurs faisceaux 34, 35 en direction des rives 36, 37 de la bande 28. Selon l'invention, dans la branche inférieure du cé sont ménagés deux logements débouchant sur les faces latérales 38, 39 du bâti 31, dans lesquels sont installés, éventuellement, à demeure deux boîtiers 1, 1' identiques à celui décrit précédemment. Ils sont disposés de telle manière que leurs fenêtres 5 perméables aux rayons X se trouvent sur le parcours des faisceaux 34, 35. Dans chacun de ces boîtiers 1, 1' est insérée de manière amovible une plaque support 18, 18' du type décrit précédemment, sur laquelle sont installés les éléments actifs d'une jauge de mesure de l'épaisseur du produit 28. Les plaques de fermeture 19, 19' solidaires des plaques support 18, 18' sont, dans l'exemple décrit et représenté, aisément accessibles de l'extérieur du bâti 31. Sur ces plaques de fermeture 19, 19' sont connectés des dispositifs 40, 41 d'alimentation en eau (ou en tout autre fluide refroidissant), assurant le refroidissement des organes de la jauge correspondante, ainsi que des moyens 42, 43 de restitution à l'opérateur des résultats des mesures effectuées par les jauges. Bien entendu, le bâti 31 peut aussi intégrer un dispositif de mesure de l'épaisseur du produit 28 selon l'invention qui serait destiné à effectuer ce type de mesure sur la portion centrale du produit 28, et qui serait construit et installé dans le bâti 31 selon les mêmes principes que les dispositifs précédents.

Telle qu'elle vient d'être décrite, cette installation est avantageuse en ce que les organes fonctionnels des jauges d'épaisseur sont en permanence bien protégés contre les agressions extérieures, dans la mesure où les éléments composant les boîtiers 1, 1' qui assurent cette protection n'ont jamais besoin d'être désolidarisés et présentent, de ce fait, une fiabilité maximale. D'autre part, en cas de nécessité d'intervention sur une jauge pour la réparer ou en modifier les caractéristiques, il est extrêmement aisé de retirer les plaques support 18, 18' des boîtiers 1, 1'. Enfin, la jauge peut fonctionner même lorsqu'elle a été retirée du boîtier 1, 1' de sorte qu'on peut en vérifier le fonctionnement en tout lieu.

En variante, d'autres moyens de refroidissement que les barres 23, 24 à circulation d'eau peuvent être utilisés, tels que des éléments à effet Peltier. De même, au lieu de rayons X, on peut utiliser tout autre type de rayonnement électromagnétique pénétrant.

Bien entendu, l'invention s'applique à la mesure du profil d'épaisseur de tout matériau métallique sous forme de bandes ou de plaques, et pas seulement de bandes d'acier.

## Revendications

1. Dispositif pour la mesure du profil d'épaisseur d'un produit métallique (28) sous forme d'une bande ou d'une plaque en défilement, du type comportant une source (32, 33) de rayons x émettant en direction dudit produit (28), une unité (21) de détection des rayons X située de l'autre côté dudit produit (28) par rapport à ladite source, des moyens (22) de traitement des signaux émis par l'unité de détection permettant de mesurer le profil d'épaisseur dudit produit (28), des moyens (42, 43) de restitution de cette mesure à l'opérateur et des moyens de refroidissement de l'unité de détection et des moyens de traitement de ses signaux, caractérisé en ce que l'unité de détection (21) et les moyens (22) de traitement de ses signaux sont disposés sur une plaque support (18) munie à l'une de ses extrémités d'une plaque de fermeture (19), comportant les connexions (25, 26, 27) électriques et en fluides nécessaires au fonctionnement de l'unité de détection (21) et des moyens (22) de traitement de ses signaux, en ce que ladite plaque support est insérée de manière amovible dans un boîtier (1), dont l'une des faces latérales (9) présente un évidement (10) permettant l'insertion de ladite plaque support, des moyens (11) pour la fixation de la plaque de fermeture (19) et des moyens (12) pour étanchéifier la liaison entre la face latérale (9) du boîtier et la plaque de fermeture (19), la face (3) du boîtier située en regard du produit (28) présentant face à l'unité détection (21), une fenêtre en un matériau perméable aux rayons X, un écran protecteur (7) étant prévu pour absorber les rayons X susceptibles de parvenir sur les moyens de traitement des signaux de ladite unité de détection, et en ce que le boîtier (1) est installé dans un bâti (31) qui le maintient à proximité dudit produit (28).

2. Dispositif selon la revendication 1, caractérisé en ce que l'écran protecteur (7) est constitué par une plaque en un métal lourd solidaire du boîtier (1).

3. Dispositif selon la revendication 1, caractérisé en ce que l'écran protecteur (7) est constitué par une plaque en un métal lourd solidaire de la plaque support (18).

4. Dispositif selon l'une des revendications 1 à 3, caractérisé en ce que les moyens de refroidissement sont constitués par au moins une barre (23, 24) comportant des moyens de circulation interne d'un fluide refroidissant et mise au contact de l'unité de détection (21) et des moyens (22) de traitement de ses signaux.

5. Dispositif selon la revendication 1, caractérisé en ce que ledit bâti (31) présente la forme d'un cé, entourant le produit (28), une branche horizontale (29) du cé comportant au moins une source (31, 33) de rayons X et l'autre branche horizontale (30) comportant au moins un logement pour le boîtier (1), disposé face à ladite source.

6. Dispositif selon la revendication 1, caractérisé en ce que ladite plaque de fermeture (19) est accessible à l'opérateur depuis l'extérieur dudit bâti (31).

## Patentansprüche

1. Vorrichtung zur Messung des Dickenprofils eines vorbeilaufenden Metallerzeugnisses (28) in Form eines Bandes oder einer Platte, umfassend eine Röntgenstrahlenquelle (32, 33), die in Richtung des Erzeugnisses (28) ausstrahlt, eine Einheit (21) zur Erfassung der Röntgenstrahlen, die sich in bezug auf die Quelle auf der anderen Seite des Erzeugnisses (28) befindet, Mittel (22) zur Verarbeitung der von der Erfassungseinheit ausgesendeten Signale, welche eine Messung des Dickenprofils des Erzeugnisses (28) ermöglichen, Mittel (42, 43), um diese Messung dem Bedienungsmann wiederzugeben, und Mittel zur Kühlung der Erfassungseinheit und der Mittel zur Verarbeitung ihrer Signale, dadurch gekennzeichnet, daß die Erfassungseinheit (21) und die Mittel (22) zur Verarbeitung ihrer Signale auf einer Trägerplatte (18) angeordnet sind, die an einem ihrer Enden mit einer Verschlußplatte (19) versehen ist, die elektrische Anschlüsse und Kühlmittelanschlüsse (25, 26, 27) aufweist, welche für den Betrieb der Erfassungseinheit (21) und der Mittel (22) zur Verarbeitung ihrer Signale erforderlich sind, daß die Trägerplatte herausziehbar in ein Gehäuse (1) eingefügt ist, dessen eine Seitenfläche (9) eine Aussparung (10), die das Einfügen der Trägerplatte gestattet, Mittel (11) zur Befestigung der Verschlußplatte (19) und Mittel (12) zur Abdichtung der Verbindung zwischen der Seitenfläche (9) des Gehäuses und der Verschlußplatte (19) aufweist, wobei die dem Erzeugnis (28) gegenüberliegende Fläche (3) des Gehäuses der Erfassungseinheit (21) gegenüberliegend ein Fenster aus einem für Röntgenstrahlen durchlässigen Material aufweist, wobei ein Strahlenschutzschirm (7) vorgesehen ist, um die Röntgenstrahlen, die auf die Mittel zur Verarbeitung der Signale der Erfassungseinheit gelangen können, zu absorbieren, und daß das Gehäuse (1) in einem Rahmen (31) montiert ist, der es in der Nähe des Erzeugnisses (28) hält.

2. Vorrichtung nach Anspruch 1, dadurch gekennzeichnet, daß der Strahlenschutzschirm (7) aus einer Schwermetallplatte besteht, die fest mit dem Gehäuse (1) verbunden ist.

3. Vorrichtung nach Anspruch 1, dadurch gekennzeichnet, daß der Strahlenschutzschirm (7) aus einer Schwermetallplatte besteht, die fest mit der Trägerplatte (18) verbunden ist.

4. Vorrichtung nach einem der Ansprüche 1 bis 3, dadurch gekennzeichnet, daß die Kühlmittel aus mindestens einem Stab (23, 24) bestehen, der Mittel zum inneren Umlauf eines Kühlmittels aufweist und mit der Erfassungseinheit (21) und den Mitteln (22) zur Verarbeitung ihrer Signale in Kontakt ist.

5. Vorrichtung nach Anspruch 1, dadurch gekennzeichnet, daß der Rahmen (31) die Form eines C aufweist und das Erzeugnis (28) umgibt, wobei ein horizontaler Arm (29) des C wenigstens eine Röntgenstrahlenquelle (31, 33) aufweist und der andere horizontale Arm (30) wenigstens eine Aufnahme für das Gehäuse (1) aufweist, die der Quelle gegenüberliegend angeordnet ist.

6. Vorrichtung nach Anspruch 1, dadurch gekennzeichnet, daß die Verschlußplatte (19) für den Bedienungsmann von der Außenseite des Rahmens (31) her zugänglich ist.

## Claims

1. Device for the measurement of the thickness profile of a metal product (28) in the form of a moving strip or a moving plate, of the type composed of an X-ray source (32, 33) emitting in the direction of the said product (28), an X-ray detection unit (21) located on the other side of the said product (28) with respect to the said source, means (22) for processing the signals emitted by the detection unit enabling the thickness profile of the said product (28) to be measured, means (42, 43) for displaying this measurement to the operator and means for cooling the detection unit and means for processing its signals, characterized in that the detection unit (21) and the means (22) for processing its signals are arranged on a support plate (18) fitted at one of its ends with a closure plate (19) including the electrical and fluid connections (25, 26, 27) necessary for the operation of the detection unit (21) and of the means (22) for processing its signals, in that the said support plate is removably inserted into a box (1), one (9) of the side faces of which has an opening (10) enabling the said support plate to be inserted, means (11) for the attachment of the closure plate (19) and means (12) for sealing the join between the side face (9) of the box and the closure plate (19), that face (3) of the box located opposite the product (28) having, facing the detection unit (21), a window made of an X-ray-permeable material, a protective shield (7) being provided for absorbing the X-rays capable of reaching the means for processing the signals of the said detection unit, and in that the box (1) is installed in a frame (31) which holds it close to the said product (28).

2. Device according to Claim 1, characterized in that the protective shield (7) is formed by a plate made of a heavy metal, fastened to the box (1).

3. Device according to Claim 1, characterized in that the protective shield (7) is formed by a plate made of a heavy metal, fastened to the support plate (18).

4. Device according to one of Claims 1 to 3, characterized in that the cooling means are formed by at least one bar (23, 24), which includes means for internal circulation of a coolant and which is placed in contact with the detection unit (21) and with the means (22) for processing its signals.

5. Device according to Claim 1, characterized in that the said frame (31) has the shape of a C surrounding the product (28), a horizontal limb (29) of the C including at least one X-ray source (31, 33) and the other horizontal limb (30) including at least one housing for the box (1), arranged facing the said source.

6. Device according to Claim 1, characterized in that the said closure plate (19) is accessible to the operator from outside the said frame (31).
